**Europäisches Patentamt**

(19) **European Patent Office**

**Office européen des brevets**

(11) Veröffentlichungsnummer: **0 140 088**

**A2**

(12) # EUROPÄISCHE PATENTANMELDUNG

(21) Anmeldenummer: **84110840.0**

(22) Anmeldetag: **12.09.84**

(51) Int. Cl.⁴: **B 01 D 13/00**
**C 22 B 34/22, C 22 B 34/32**
**C 02 F 1/44**

(30) Priorität: **29.09.83 AT 3466/83**

(43) Veröffentlichungstag der Anmeldung:
**08.05.85 Patentblatt 85/19**

(84) Benannte Vertragsstaaten:
**DE FR GB IT LU NL SE**

(71) Anmelder: **Treibacher Chemische Werke Aktiengesellschaft**

**A-9330 Treibach(AT)**

(72) Erfinder: **Marr, Rolf, Prof.Dr.-Ing.**
**Neue-Welt-Höhe 33**
**A-8042 Graz(AT)**

(72) Erfinder: **Bouvier, Alexander, Dr. Dipl.-Ing.**
**Jerolitschstrasse 19**
**A-9201 Krumpendorf(AT)**

(72) Erfinder: **Hafner, Leo**
**Römerstrasse 30**
**A-9333 Althofen(AT)**

(74) Vertreter: **Kliment, Peter, Dipl.-Ing. Mag.-jur.**
**Singerstrasse 8**
**A-1010 Wien(AT)**

(54) **Verfahren zur Rückgewinnung von Vanadin aus Abwasser.**

(57) Verfahren zur Rückgewinnung von Vanadin (V) aus Abwasser der Vanadinproduktion, das bis zu 5 g/l Chrom (VI) enthalten kann, unter Anwendung der Flüssig-Membran-Permeation, wobei folgende Verfahrensmaßnahmen kombiniert werden,

a) Bildung einer stabilen Emulsion durch Dispergieren einer wäßrigen, ein Ammonsaltz enthaltenden Phase in einer organischen Phase bestehend aus einem quarternären Ammonsaltz als stoffspezifisches Transportmittel für Anionen, einer oder mehrerer grenzflächenaktiver Substanzen und einem oder mehreren Verdünnungsmittel,

b) Inkontaktbringen dieser Emulsion mit dem Vanadin (V)-haltigen Abwasser in einer Mischvorrichtung, vorzugsweise einem Gegenstromapparat, unter Einstellung eines Volumverhältnisses des Abwassers zur wäßrigen Phase im Inneren der Emulsion von 10 : 1 bis 500 : 1, wobei das abzutrennende Vanadin (V) die als Membran wirkende organische Phase durchdringt und sich in der wäßrigen Phase derselben anreichert,

c) Trennung der von Vanadin (V) gereinigten Abwasserphase von der Emulsion und

d) Spaltung der von der Abwasserphase getrennten Emulsion mit Hilfe einer Zentrifuge oder einer Kombination Zentrifuge - elektrisches Feld, wobei direkt verwertbares Ammonvanadat abgetrennt wird und die wäßrige Phase sowie die organische Phase gegebenenfalls wieder zur Emulsionsherstellung rückgeführt werden.

EP 0 140 088 A2

./...

0140088

## Verfahren zur Rückgewinnung von Vanadin aus Abwasser

Die Erfindung bezieht sich auf ein Verfahren zur Rückgewinnung von Vanadin aus dem Abwasser der Vanadinproduktion.

Bekannte Möglichkeiten zur Reinigung von Abwässern der Vanadinproduktion, die im allgemeinen Vanadin in Form von 5-wertigem Vanadat und Chrom in Form von 6-wertigem Chromat enthalten, sind:

         a) die Fällung
         b) die Extraktion.

Bei den aus der Praxis bekanntn Fällungsverfahren wird das Abwasser in stark saurem Bereich mit Schwefeldioxid behandelt, wobei das 6-wertige Chrom zum 3-wertigen reduziert wird. Bei anschließender Neutralisation fällt das Chrom als Chromhydroxid zusammen mit Vanadin aus. Die weitere Aufarbeitung dieses Niederschlags ist jedoch technisch schwierig und mit großen Kosten verbunden, das Produkt wird daher oft auf Deponie gelagert. Auch wurde bereits versucht, eine getrennte Fällung der beiden Metalle Vanadin und Chrom durchzuführen, doch ist auch dieses Verfahren relativ aufwendig.

Der Einsatz der Extraktionstechnologie für die Abtrennung von Chrom und Vanadin in diesem Konzentrationsbereich verursacht auf Grund der großen Mengen an Extraktionsmitteln hohe Kosten und erhöht außerdem ganz wesentlich die Belastung des Abwassers mit organischen Stoffen, die auf Grund der Zerstörung des Extraktionsmittels durch die Oxidationskraft von Vanadin (V) und Chrom (VI) auftreten.

Der vorliegenden Erfindung liegt nun die Aufgabe zu Grunde, eine selektive und wirtschaftliche Abtrennung des Vanadins aus dem Abwasser zu gewährleisten, wobei eine direkt verwertbare Vandinverbindung gebildet wird. Aus dem vom Vandin gereinigten Abwasser kann dann das Chrom nach einem der bekannten Verfahren, wie z.B. die Fällung als Hydroxid, abgetrennt werden.

0140088

Zur Lösung dieser Aufgabe wurde erstamlig für ein solches Verfahren die Flüssig-Membran-Permeation angewendet, welche von N.N. Li (US-PS 3,779,907) entwickelt wurde. Durch diese Methode ist eine Abtrennung und Rückgewinnung von Stoffen möglich, die in sehr geringen Konzentrationen vorliegen.

Die Erfindung betrifft ein Verfahren zur Rückgewinnung von Vanadin (V) aus Abwasser der Vanadinprodution das bis zu 5 g/l Chrom (VI) enthalten kann, unter Anwendung der Flüssig-Membran-Permeation; das erfindungsgemäße Verfahren ist gekennzeichnet durch die Kombination folgender Maßnahmen:

a) Bildung einer stabilen Emulsion durch Dispergieren einer wäßrigen, ein Ammonsalz enthaltenden Phase in einer organischen Phase bestehend aus einem quarternären Ammonsalz als stoffspezifisches Transportmittel für Anionen, einer oder mehrerer grenzflächenaktiver Substanzen und einem oder mehreren Verdünnungsmittel,

b) Inkontaktbringen dieser Emulsion mit dem Vanadin (V)-haltigen Abwasser in einer Mischvorrichtung, vorzugsweise einem Gegenstromapparat, unter Einstellung eines Volumverhältinisses des Abwassers zur wäßrigen Phase im Inneren der Emulsion von 10 : 1 bis 500 : 1, wobei das abzutrennende Vanadin (V) die als Membran wirkende organische Phase durchdringt und sich in der wäßrigen Phase derselben anreichert,

c) Trennung der von Vanadin (V) gereinigten Abwasserphase von der Emulsion und

d) Spaltung der von der Abwasserphase getrennten Emulsion mit Hilfe einer Zentrifuge oder einer Kombination Zentrifuge - elektrisches Feld, wobei direkt verwertbares Ammonvanadat abgetrennt wird und die wäßrige Phase sowie die organische Phase gegebenenfalls wieder zur Emulsionsherstellung rückgeführt werden.

Durch die Kombination dieser Maßnahmen ist es möglich, das Vanadin (V) bevorzugt aus dem Abwasser zu entfernen, wobei das Vanadin als direkt verwertbares Ammonvanadat anfällt und im Abwasser verbliebenes

0140088

Chrom (VI) nach einem der bekannten Verfahren abgetrennt werden kann.

Als stoffspezifisches Transportmittel wird erfindungsgemäß ein quarternäres Ammoniumsalz eingesetzt, das für den Transport von Anionen geeignet ist, und das dazu beiträgt, daß insbesondere im pH-Bereich von 6 - 10 die Abrennung des Vandins stark bevorzugt gegenüber der Abtrennung des Chroms erfolgt. Als grenzflächenaktive Substanzen werden SPAN 80 (=Sorbitolmonooleat) und/oder ECA 4360 (=Polyamin) der Fa. Esso und als Verdünnungsmittel Paraffin und/oder Kerosin verwendet. Der Zusatz von ECA 4360 wirkt sich insbesonders günstig auf die Temperaturstabilität der Emulsion aus. Die Vanadin (V)-Abtrennung wird bevorzugt im Temperaturbereich von 15 - 45$^\circ$C vorgenommen.

Ein besonderer Vorteil wird bei dem erfindungsgemäßen Verfahren durch die chemische Zusammensetzung der inneren, wäßrigen Phase erreicht. Auf Grund der Verwendung von Ammonsalzen bildet sich nämlich bereits bei geringer Beladung ein schwerlöslicher Ammonvanadatniederschlag, der nach Abtennung ohne weitere Reinigungsoperationen einer direkten Weiterverwertung zugeführt werden kann. Dies ist bei der Verwendung von Alkalisalzlösungen als innere wäßrige Phase nicht möglich; außerdem bewirken Alkalisalze die Bevorzugung der Chrom(VI)-Anreicherung. Die Konzentration der Ammonsalzlösung liegt vorzugsweise zwischen 0,5 und 6 Mol/l, insbesondere bei 3 bis 5 Mol/l.

Durch die Wahl extremer Phasenverhältnisse von innerer wäßriger Phase zu äußerer wäßriger Phase im Bereich von 1 : 10 bis 1 : 500 ist es möglich, hohe Anreicherungen in der inneren wäßrigen Phase zu erzielen; dies ist ein bedeutender Vorteil dieser Technologie gegenüber den Extraktionsverfahren. Durch die Wahl der Phasenverhältnisse von innerer, wäßriger Phase zur organischen Membranphase, die im Bereich von 1 : 1 bis 1 : 3 liegen, steht dementsprechend eine viel geringere Menge an organischer Phase im Kontakt mit dem zu reinigenden Abwasser, was im Vergleich mit der üblichen Extraktion zu einer viel geringeren Abwasserbelastung durch organisches Material führt.

Weiters zeichnet sich das erfindungsgemäße Verfahren durch geringe Kontaktzeiten zwischen Abwasser und Emulsion aus. Wie die Versuche zeigten, ist der Übergang des Vanadin(V) aus dem Abwasser in die innere wäßrige Phase nach maximal 10 Minuten praktisch beendet. Bei Verwendung eines Gegenstromapparats kann durch Änderung der Auslegung desselben die Kontaktzeit optimal den jeweiligen Erfordernissen angepaßt werden.

Ein wesentliches Merkmal des erfindungsgemäßen Verfahrens ist auch die Spaltung der mit Vanadin(V) beladenen Emulsion. Üblicherweise erfolgt die Spaltung von Emulsionen der Flüssig-Membran-Permeation durch Anlegen eines elektrischen Feldes. Wegen des Auftretens von zwei flüssigen und einer festen Phase im erfindungsgemäßen Verfahren erwies sich eine Emulsionsspaltung im elektrischen Feld als nicht zielführend. Hingegen führte die Spaltung der erfindungsgemäß gebildeten Emulsionen mit Hilfe einer Zentrifuge oder der Kombination einer Zentrifuge mit einem elektischen Feld zu einer sauberen und raschen Trennung der Emulsion in die flüssige organische Phase, die flüssigwäßrige Phase und in die feste, aus Ammonvanadat bestehende Phase. Die beiden flüssigen Phasen können so direkt wieder zur Emulsionsherstellung verwendet werden, falls gewünscht, kann die flüssige wäßrige Phase voher noch in einem Eindicker eingespeist werden, wobei weiteres Ammonvanadat ausfällt, die so an Vanadin(V) verarmte Phase wird dann zur Emulsionsbereitung verwendet. Das anfallende Ammonvanadat kann direkt ohne zusätzliche Reinigungsoperation einer Weiterverwendung zugeführt werden.

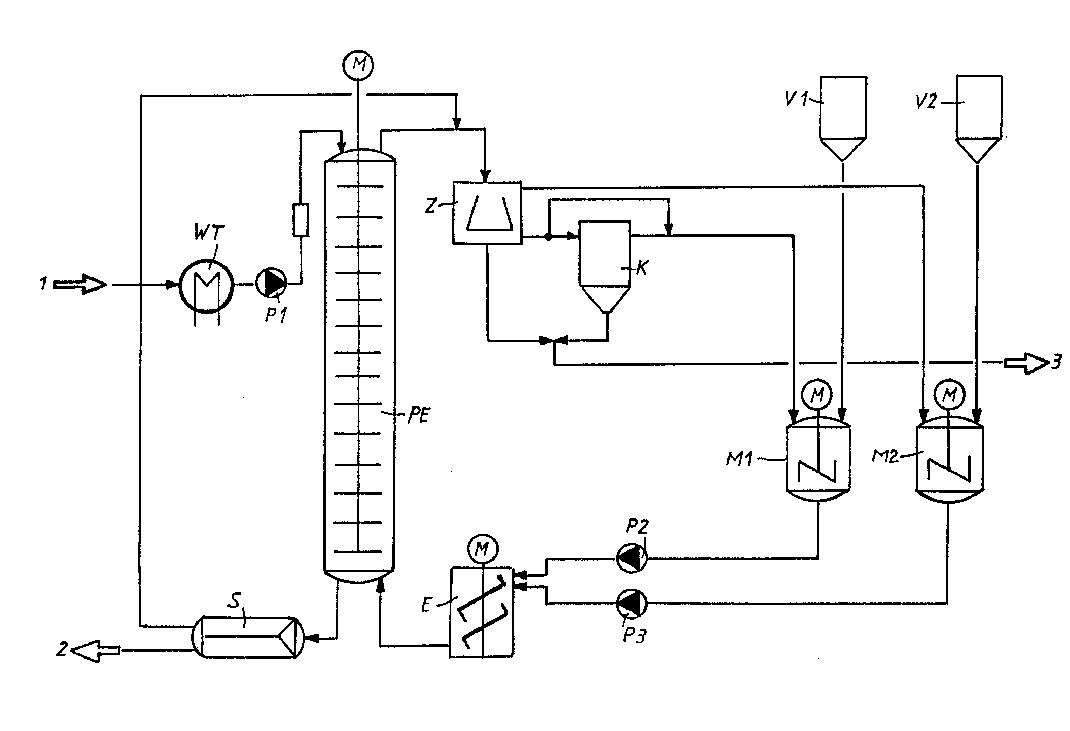

Die Abbildung zeigt das Verfahrensschema einer Anlage zur Flüssig-Membran-Permeation von Vanadin(V), wobei mit 1 der Eintritt des Abwassers, mit 2 der Austritt des gereinigten Abwassers und mit M die Antriebe der Rührwerke für den Gegenstromapparat bezeichnet sind.

Die zu reinigende Abwasserlösung wird, falls erforderlich, über einen Wärmetauscher (WT) in den Permeationsapparat, der vorzugsweise ein gerührter Gegenstromapparat (PE) ist, durch Pumpe (P 1) gepumpt. Im Gegenstrom wird die Lösung mit einer stabilen Wasser-in-Öl-Emulsion kontaktiert, die im Emulgator (E) hergestellt wurde. Dazu wird aus dem Vorratsgefäß (V 1) übet einen Mischer (M 1) die innere wäßrige Phase (Ammonsalzlösung) über eine Pumpe (P 2) in den Emulgator (E) dosiert, aus dem Vorratsgefäß (V2) wird die im Kreislauf geführte organische Membranphase im Mischer (M 2) bei eventuell auftretenden Verlusten aufgefüllt und durchgemischt. Über die Pumpe (P 3) wird die organische Membranphase ebenfalls in den Emulgator (E) zudosiert. Das gereinigte Abwasser wird zur Abscheidung restlicher Emulsionstropfen über einen weiteren Absetzer (S) geführt. Die beladene Emulsion wird mit Hilfe einer Zentrifuge (Z) gespalten und der anfallende Ammonvanadatniederschlag abgetrennt (3). Die innere wäßrige Phase kann in einem Eindicker (K) weiter aufkonzentriert werden, wodurch weiteres Ammonvanadat ausfällt, welches ebenfalls der Weiterverarbeitung zugeführt werden kann. Die innere wäßrige Phase wird dem Mischer (M 1) zugeführt, wo aus dem Vorratsgefäß (V 1), wie schon erwähnt, zur Aufkonzentrierung Ammonsalzlösung zugeführt wird.

Die Erfindung soll durch folgende Beispiele näher erläutert werden.

Beispiel 1:

Die Abtrennung von Vanadin (V) aus Abwasser erfolgt nach der im Verfahrensschema angeführten Vorgangsweise. Dazu wird eine stabile Emulsion von $5mNH_4Cl$-Lösung in einer organischen Phase bestehend aus 12 Gew.-%Sorbitolmonooleat, 10 Gew.-% Tricaprylmethylammoniumchlorid und 78 Gew.-% Paraffin als Verdünnungsmittel mit dem Abwasser, welches 0,19 g/l Vanadin (V), 1,50 g/l Cr(VI) sowie $Na^+$, $SO_4^{2-}$, $Cl^-$ und $NH_4^+$ in einer Menge von insgesamt 40 g/l enthält, dessen pH-Wert gleich 8 ist, bei einer Temperatur von 20°C in einer gerührten Kolonne mit 100 mm Durchmesser in Kontakt gebracht. Das Verhältnis der inneren wäßrigen Phase zur äußeren wäßrigen Phase beträgt 1 : 200, die Durchsatzmengen betragen 160 l/h für das Abwasser und 30 l/h für die Emulsion. Um das oben angeführte Phasenverhältnis bei den genannten Durchsätzen aufrechtzuerhalten, muß ein Teilstrom der Emulsion wieder in den Prozeß rückgeführt werden. Das gereinigte Abwasser wird nach Verlassen der Kolonne zur Abscheidung restlicher Emulsionstropfen über einen weiteren Absetzer geführt und dann analysiert, die Konzentration an Vanadin (V) betrug 0,016 g/l, die

des Chrom (VI) war 1,37 g/l. Die mit Vanadin beladene Emulsion wird in einer Zentrifuge gespalten, wobei stündlich ein Ammonvanadatniederschlag anfällt, der 29,6 g Vanadin enthält. Die Ammonchloridlösung und die organische Membranphase werden dann wieder in den Kreislauf rückgeführt. Die Versuchsdauer betrug 48 Stunden.

Beispiel 2:

Die Abtrennung des Vanadin (V) erfolgte wie im Beispiel 1 beschrieben.

Folgende Verfahrensbedingungen wurden eingehalten:

Emulsion: innere, wäßrige Phase: $4mNH_4Cl$

äußere, als Membran wirkende organische Phase:

Grenzflächenaktive Substanz: 10 Gew.-% Sorbitolmonooleat Transportmittel: 8 Gew.-% Tricaprylmethylammoniumchlorid Verdünnungsmittel: 10 Gew.-% Kerosin, 72 Gew.-% Paraffin

Phasenverhältnis innere wäßrige Phase : äußerer wäßriger Phase 1 : 20

Abwasser: pH = 6    T = $20^O$C

V(V) = 0,325 g/l

Cr(VI) = 0,008 g/l

Die Konzentration des Abwassers nach Durchgang durch die Kolonne betrug: Vanadin (V)    0,003 g/l

Chrom (VI)    0,003 g/l

Beispiel 3:

Vanadin (V) wurde aus Abwasser mit 0,247 g/l V(V) und 1,79 g/l Cr (VI) nach dem erfindungsgemäßen Verfahren abgetrennt.

Die Abtrennung erfogte unter folgenden Bedingungen:

pH = 8,5    T = $30^O$C

Zusammensetzung der Emulsion:

innere wäßrige Phase: $5mNH_4Cl$

äußere, als Membran wirkende organische Phase:

Grenzflächenaktive Substanz: 2 Gew.-% Sorbitolmonooleat
+ 1 Gew.-% Polyamin
Transportmittel : 8 Gew.-% Tricaprylmethylammoniumchlorid
Verdünnungsmittel: 27 Gew.-% Paraffin, 62 Gew.-% Kerosin

Phasenverhältnis: innere wäßrige Phase: äußerer wäßriger Phase
1 : 40

Die Konzentrationen von Vanadin (V) und Chrom (VI) der äußeren
wäßrigen Phase (Abwasser) betrugen nach einer Verweilzeit in der
Kolonne von:

| | | |
|---|---|---|
| 2 Min.: | 0,093 | g/l V(V) |
| | 1,75 | g/l Cr(VI) |
| 5 Min.: | 0,035 | g/l V(V) |
| | 1,73 | g/l Cr(VI) |
| 10 Min.: | 0,028 | g/l V(V) |
| | 1,70 | g/l Cr(VI) |

Beispiel 4:
Vanadin (V) wurde aus Abwasser mit 0,30 g/l V(V) und 2,1 g/l Cr (VI)
nach dem erfindungsgemäßen Verfahren abgetrennt.

Die Abtrennung erfolgte bei pH = 8 und $40^{\circ}$C

Zusammensetzung der Emulsion:
innere wäßrige Phase : 3 m$NH_4NO_3$
äußere, als Membran wirkende organische Phase:
Grenzflächenaktive Substanz : 6 Gew.-% Sorbitolmonooleat
+ 0,5 Gew.-% Polyamin
Transportmittel: 83,5 Gew.-% Tricaprylmethylammoniumchlorid
Verdünnungsmittel: 83,5 Gew.-% Paraffin

Die Konzentration des gereinigten Abwassers betrug nach Durchgang
durch die Kolonne:

| | | |
|---|---|---|
| Vanadin (V) | 0,032 | g/l |
| Chrom (VI) | 1,95 | g/l |

0140088

Patentansprüche:

1. Verfahren zur Rückgewinnung von Vanadin (V) aus Abwasser der Vanadinproduktion, das bis zu 5 g/l Chrom (VI) enthalten kann, unter Anwendung der Flüssig-Membran-Permeation, gekennzeichnet durch die Kombination folgender Maßnahmen:

a) Bildung einer stabilen Emulsion durch Dispergieren einer wäßrigen, ein Ammonsalz enthaltenden Phase in einer organischen Phase bestehend aus einem quarternären Ammonsalz als stoffspezifisches Transportmittel für Anionen, einer oder mehrerer grenzflächenaktiver Substanzen und einem oder mehreren Verdünnungsmittel,

b) Inkontaktbringen dieser Emulsion mit dem Vanadin (V)-haltigen Abwasser in einer Mischvorrichtung, vorzugsweise einem Gegenstromapparat, unter Einstellung eines Volumverhältnisses des Abwassers zur wäßrigen Phase im Inneren der Emulsion von 10 : 1 bis 500 : 1, wobei das abzutrennende Vanadin (V) die als Membran wirkende organische Phase durchdringt und sich in der wäßrigen Phase derselben anreichert,

c) Trennung der von Vanadin (V) gereinigten Abwasserphase von der Emulsion und

d) Spaltung der von der Abwasserphase getrennten Emulsion mit Hilfe einer Zentrifuge oder einer Kombination Zentrifuge – elektrisches Feld, wobei direkt verwertbares Ammonvandat abgetrennt wird und die wäßrige Phase sowie die organische Phase gegebenenfalls wieder zur Emulsionsherstellung rückgeführt werden.

2. Verfahren nach Anspruch 1, dadurch gekennzeichnet, daß das quarternäre Ammonsalz in einer Konzentration von 2-14 Gew.-%, vorzugsweise 6-12 Gew.-%, bezogen auf die Membranphase, eingesetzt wird.

3. Verfahren nach Anspruch 1 oder 2,
   dadurch gekennzeichnet,
   daß in der organischen Membranphase als grenzflächenaktive
   Substanz 0,5-12 Gew.-% Sorbitolmonooleat und/oder ein Polyamin
   eingesetzt wird.

4. Verfahren nach einem der Ansprüche 1 bis 3,
   dadurch gekennzeichnet,
   daß in der organischen Membranphase als Verdünnungsmittel Paraffin
   und/oder Kerosin eingesetzt wird.

5. Verfahren nach einem der Ansprüche 1 bis 4,
   dadurch gekennzeichnet,
   daß eine wäßrige Phase mit einer Konzentration der Ammonsalzlösung zwischen 0,5 und 6 Mol/l, vorzugsweise zwischen 3 und 5
   Mol/l, eingesetzt wird.

6. Verfahren nach einem der Ansprüche 1 bis 5,
   dadurch gekennzeichnet,
   daß in der wäßrigen Phase eine aus Ammonchlorid, Ammonitrat,
   Ammonsulfat und/oder Ammonhydroxid bestehende Ammonsalzlösung
   eingesetzt wird.

7. Verfahren nach einem der Ansprüche 1 bis 6,
   dadurch gekennzeichnet,
   daß das zu reinigende Abwasser mit einem pH-Wert zwischen pH 6
   und pH 10, vorzugsweise zwischen pH 6,0 und pH 8,5, eingesetzt
   wird.

8. Verfahren nach einem der Ansprüche 1 bis 7,
   dadurch gekennzeichnet,
   daß das Abwasser mit einer Temperatur zwischen 10 und 70$^{\circ}$C,
   vorzugsweise zwischen 15 und 45$^{\circ}$C, eingesetzt wird.